# EUROPEAN PATENT APPLICATION

(11) **EP 1 273 237 A1**
(43) Date of publication of application: **08.01.2003**
(21) Application number: 01202540.9
(22) Date of filing: 02.07.2001
(51) Int. Cl.: A23C 19/032, A23C 19/11, A23C 9/13, A23C 9/127, A23C 9/123, A23L 1/105, A23B 4/12, A23K 3/03

(54) **Nisin-producing starter cultures for fermented food products**

(71) Applicant: CSK Food Enrichment B.V., 8901 BA Leeuwarden (NL)
(72) Inventor: Meijer, Willem Cornelis, 6712 HA Ede (NL); Boven, Aart, 9721 WP Groningen (NL); Twigt, Maria, 6721 MR Bennekom (NL); Van de Bunt, Baren Jan, 3862 NS Nijkerk (NL)
(74) Representative: Jorritsma, Ruurd

(57) **Abstract**

The present invention relates to nisin-producing starter cultures for the production of fermented products. The nisin-producing starter cultures contain in addition to nisin-producing lactococci one or more non-lactococcal bacteria that are resistant to nisin. The nisin-resistant non-lactococcal bacteria are obtainable by adaptation to nisin. The nisin-producing starter cultures are used in processes for producing fermented products such as dairy products, sourdough, fermented meat products and silage. The nisin-producing starter cultures are particularly useful in the manufacture of non-Gouda cheese varieties.

## Description

### Field of the invention

The present invention relates to bacterial starter cultures that are used in the production of fermented products, in particular food products such as cheese. The starter cultures of the invention contain both nisin-producing lactococci and further bacteria that are resistant to nisin. Use of the starter cultures of the invention reduces the risk of growth of spoilage-bacteria.

### Background of the invention

One of the major problems in the manufacture of cheese is the risk of spoilage by Gram-positive bacteria such as *Clostridium, Staphylococcus, Bacillus,* and *Listeria.* Particularly, the growth in cheese of *Clostridia* causes a notorious defect known as "late-blow" or "butyric blowing". Spores of *Clostridia* such as *Clostridium tyrobutyricum* can survive heat treatment of the milk and subsequent growth leads to butyric acid fermentation with concomitant gas (H₂, CO₂) production in the cheese-matrix and foul smelling. The production of gas results in excessively large cavities in the cheese and may result in swelling or even in explosion of the cheese. Traditional methods to avoid outgrowth of *Clostridia* in cheese include the addition of nitrate to the cheese milk or removal of *Clostridia* by repeated bactofugation of the milk. However, both options have their drawbacks. Nitrate causes environmental problems because of the large quantities of nitrate-containing whey produced. Nitrate is also associated with health risks as it may be metabolized into carcinogenic compounds in mammals. Removal of *Clostridia* by bactofugation on the other hand requires expensive equipment and may affect the overall yield of the cheese production process.

Nisin is a lanthionine-containing antimicrobial peptide produced by certain strains of *Lactococcus lactis.* Nisin effectively inhibits the growth of Gram-positive bacteria in general. Nisin is therefore successfully being applied in the production of food to prevent spoilage by Gram-positive bacteria such as *Clostridium, Staphylococcus, Bacillus,* and *Listeria.* One such successful application of nisin concerns its use in the production of processed cheese and spread cheese to avoid outgrowth of *Clostridia.* However, application of nisin in cheese making in general has a major drawback because addition of nisin, or nisin-producing strains, to industrial starter cultures results in a complete inhibition of the starter culture due to high nisin sensibility of the starter cultures.

This problem has been overcome by using starter cultures, which - in addition to their fermentative capacity and their contribution to the taste of the cheese - produce nisin and are resistant to this agent. Hugenholtz et al. (1991; Application of nisin A and nisin Z in dairy technology. In: Nisin and novel lantibiotics. Proceedings of the First International Workshop on Lantibiotics, April 15-18, 1991, Bad Honnef, Germany, Escom Leiden) report the use of a nisin-producing starter culture in the production of Gouda cheese. For this purpose they developed a starter culture based on a combination of nisin-producing and nisin-immune lactococci. These properties were introduced into appropriate industrial starter strains using transposons that are naturally transferred by conjugation within the species *Lactococcus lactis*. A nisin-producing starter culture for Gouda cheese is commercially available from CSK food enrichment (Leeuwarden, The Netherlands) under the name Dairysafe™. Previously such a nisin-producing starter culture was available from CSK food enrichment under the name Nizostar™. Similarly, Ross et al. (US Patent No. 6,207,411) describe the use of starter cultures based on a L. *lactis* strain that produces a novel nisin-like bacteriocin designated lacticin 3147, for the production of Cheddar cheese.

However, the manufacture of other fermented (food)products, including e.g. many types of cheeses other than Gouda, often requires the use of starter cultures that contain - often in addition to lactococci - bacteria that do not belong to the species *L. lactis.* Such non-*L. lactis* bacteria are necessary to confer typical taste or physical properties, such as e.g. eyes, to specific cheese types. Unfortunately these non-*L. lactis* bacteria are usually sensitive to bacteriocins like nisin, whereas they are not susceptible to conjugational transfer of the *L. lactis* transposons conferring resistance or immunity to nisin. Thus, there is a need for non-*L. lactis* bacteria for starter cultures that are resistant and/or immune to bacteriocins like nisin.

### Description of the invention

The present invention relates to the surprising discovery that bacterial strains that are used as part of a starter culture can be made resistant to bacteriocins like nisin by means of adaptation. As a first example, strains of *Propionibacterium freudenreichii* and *Lactobacillus bulgaricus* that are used together in the manufacture of Maasdammer-type cheese as part of a starter culture in conjunction with acidifying *L. lactis* strains have been selected through adaptation to ever increasing concentrations of nisin. The thus-obtained nisin-resistant strains of *P. freudenreichii* and *Lb. bulgaricus* (officially *Lactobacillus delbrueckii* subsp. *bulgaricus*) were successfully applied in combination with nisin-producing and nisin-immune strains of *L. lactis* in a starter culture for the production of Maasdammer cheese. The organoleptic quality of the Maasdammer cheese thus produced was similar to that of a reference cheese made with a conventional starter culture that does not produce nisin.

In a first aspect the invention relates to a process for producing a fermented product, preferably a food- or feed-product, wherein the process comprises a fermentation step using one or more nisin-resistant bacterial strains in the presence of nisin. Preferably, the process comprises a fermentation step in which a starter culture is used that comprises (a) a nisin-producing *L. lactis* strain; and (b) one or more nisin-resistant bacterial strains. Preferably, in addition to the nisin-producing strain of *L. lactis*, one or more nisin-immune strains of *L. lactis* may further be included in the starter culture. Preferably the fermented product is a dairy product, silage or a fermented meat product. The dairy product preferably is cheese, of which non-Gouda cheeses are preferred. Most preferred are cheeses the production of which involves fermentation with a non-*L. lactis* bacterium.

Thus in a preferred aspect the invention relates to a process for the manufacture of cheese, wherein the process comprises a fermentation step using a starter culture comprising: (a) a nisin-producing *L. lactis* strain that is useful as starter in cheese production; and (b) one or more nisin-resistant bacteria that are useful as starter in cheese production. Preferably, in addition to the nisin-producing strain of *L. lactis*, one or more nisin-immune strains of *L. lactis* may further be added into the cheese making process, e.g. to further complement the starter culture.

A nisin-producing *L. lactis* strain is herein defined as a strain that is capable of producing a nisin and that is immune to nisins, whereby the capability to produce nisin and the nisin-immunity are encoded by genetic information that is present on, or derived from a transposon, such as e.g. Tn5276. A nisin-immune *L. lactis* strain is herein defined as a strain that is immune to nisin, whereby the immunity is encoded by genetic information that is present on, or derived from a transposon, such as e.g. Tn*5276-NI*. Nisin-resistant bacterial strains are herein defined as Gram-positive bacterial strains that are resistant to nisin whereby the nisin-resistance is preferably not mediated by transposon-derived genetic information, but rather is acquired by means of adaptation. The "fermentation step using a starter culture" is understood to mean that in the process of producing a fermented product starter bacteria are added to one or more of the ingredients or starting materials used for producing the fermented product and at some stage during the process, such that the nisin-producing strain *L. lactis* strain is capable of producing a sufficient level of nisin in the fermented product while together the various starter bacteria are capable of performing their specific functions during the production process, such that a fermented product with the required properties is obtained. For example, in the manufacture of cheese, usually the starter bacteria are added into the cheese making process before or during coagulation of the cheese milk but they may also be added thereafter, e.g. while cutting or stirring the curd. The person skilled in the art of making the fermented product will know how to add the starter bacteria in the process, depending on the type of fermented product. Likewise it is understood that the various starter bacteria may be added together as one starter culture but they may also be added separately, e.g. at different stages in the production process.

The nisin-producing *L. lactis* strain, together with optional further nisin-immune *L. lactis* strains, forms a basic mesophilic starter culture, at least capable of acidifying the fermented product (e.g. cheese milk) as known in the art per se. The complement of the nisin-producing and nisin-immune strains of *L. lactis* is preferably chosen such that together the *L. lactis* strains are capable of performing the required basic activities of a starter culture, e.g. in the case of cheese making including proteolytic activity, high acidification rate, bacteriophage resistance, and, in general sensory qualities. If one of the *L. lactis* strains in the starter culture is *L. lactis* subsp. *lactis* biovar. *diacetylactis*, a further preferred activity of such strain is the ability to utilize citrate. Further specific *L. lactis* strains may be added to the complement making up the basic mesophilic starter culture, such as e.g. a debittering *L. lactis* strain.

Herein, the required proteolytic activity of a starter culture is defined as the ability to hydrolyze (milk derived) proteins to a desired level, and can be measured using chromogenic substrates that are known in the art. Whether or not a starter culture has the required proteolytic activity is ultimately reflected in the general sensory qualities of the food product in question. The required acidification rate of a starter culture is defined as the ability to acidify the milk in a given time span, preferably by the production of lactic acid, and can be measured by the quantity of lactic acid produced in a fermented milk culture at 30°C in 6 hours. Preferably at least 3 g/l lactic acid is produced under these conditions. The required bacteriophage resistance of a starter culture is defined as the resistance of a starter to industrial phages as known in the art, and can be measured by the effect of phage treatments on the acidification rate of the starter culture, in which the phages are derived from a wide range of industrial sources. The general sensory qualities are defined as the overall flavour perception of a product, and can be measured by evaluation of a product-expert panel.

The nisin-producing strain may produce either nisin A or nisin Z since both functions may be transferred by conjugation. Similarly, the optional nisin-immune *L. lactis* strains will be immune to both nisin A and nisin Z because immunity to one of the nisins will provide cross-immunity to the other nisins.

The nisin-producing *L. lactis* strain preferably is capable of producing at least 5, 25, 100, 400, 600 or 800 IU nisin per ml (of milk), preferably under conditions defined as the conditions that occur during the manufacture and optionally ripening of the fermented product such as cheese. The amount of the nisin-producing *L. lactis* strains added into the process is preferably such that the nisin level in the fermented product is sufficient to prevent spoilage by bacteria. E.g. in the cheese making process this amount is preferably such that the nisin level in the cheese is sufficient to prevent butyric acid fermentation by *Clostridia.* For this purpose a level of preferably at least 20, 40, 80, 150, or 300 IU nisin per gram of fermented product is preferred. On the other hand, the amount of the nisin-producing *L. lactis* strains added into the process is preferably such that it does not exceed the maximum level of nisin in the fermented product. E.g. even though there is no maximum allowance of nisin in cheese for nisin produced in the cheese *in situ*, the nisin level in the cheese preferably does not exceed a certain level such as e.g. 1000, 750 or 500 IU per gram of cheese.

In order to achieve the preferred levels of nisin in fermented products usually only a part of the starter culture needs to be nisin-producer. The skilled person will appreciate that the exact amount of nisin-producers to be added into the process will depend on the rate of nisin production of the particular nisin-producer, the conditions and the desired end-level of nisin in the fermented product and that the amount of nisin-producers to be added into the process may be optimized to the circumstances. Usually, at least 1, 2, or 5% of the starters added into the process will be nisin-producers whereas usually no more than 50%, 20%, or 10% of the starters added into the process will be nisin-producers. It is understood that the percentages of the various starter bacteria (such e.g. the nisin-producers here) are expressed as the percentage of the CFU's of a given starter bacterium of the total CFU's of starters bacteria ad may be added into the process.

In principle any *L. lactis* strain can be converted into a nisin-producer or a nisin-immune strain. Preferably the properties of nisin production and nisin immunity are conferred to the appropriate *L. lactis* strains by conjugations of transposons containing the genetic information for nisin production or nisin immunity. A preferred transposon containing the genetic information for nisin production is Tn5276; a preferred transposon containing the genetic information for nisin immunity is Tn*5276-NI*. Suitable donor strains for conjugation of Tn*5276* and *Tn5276-NI* are described by Hugenholtz et al. (*supra*) and were deposited 28 June 2001 with deposit number CBS 109540, and 3 April 1991 with deposit number CBS 181.91, respectively, at the Centraal Bureau voor Schimmelcultures, Baarn, The Netherlands.

Alternatively, the properties of nisin production and nisin immunity may be conferred to the appropriate *L. lactis* strains by means of recombinant DNA technology as known per se to the skilled person. However, the use of such GMO *L. lactis* strains is presently not preferred in view of the poor public acceptance of GMO's in food products.

A preferred nisin-producing starter culture is Dairysafe ™, which is commercially available from CSK food enrichment, Leeuwarden, The Netherlands. Dairysafe ™ TC17 contains a nisin-producing *L. lactis* subsp. *lactis* biovar. *diacetylactis* strain containing the Tn5276 transposon (referred to as strain C17::Tn5276), and Dairysafe ™ 13M contains a nisin-immune *L. lactis* subsp. *cremoris* strain containing the Tn*5276-NI* transposon (referred to as SK110::Tn*5276-NI*). Dairysafe ™ TC17 and 13M are equally dosed in the range of about 0.5-1.0% to the cheese milk. The combination of Dairysafe ™ TC17 and 13M, used in about equal amounts, allows for the production of high quality Gouda cheese and produces *in situ* about 150 - 400 IU nisin per gram cheese.

The nisin-resistant bacteria strains are strains that are added in addition to the nisin-producing basal mesophilic starter culture to confer additional and often specific properties to the fermented product. Preferably, these nisin-resistant bacteria are Gram-positive and preferably do not belong to the species *L. lactis.* E.g. in the case of cheese making, the nisin-resistant bacteria are preferably cheese-type specific in the sense that they confer one or more properties that are specific for a given type of cheese, such as e.g. taste, aromatic, and/or sensory, properties and/or physical properties such as "eyes" in the cheese or texture of the cheese, or they may affect parameters related to the cheese making process, such as e.g. a (cheese specific) acidification rate. Similarly the nisin-resistant bacteria may confer product-specific properties fermented products other than cheeses.

The nisin-resistant bacteria are preferably made resistant to nisin, either nisin A or nisin Z, by means of adaptation. For this purpose a suitable bacterial strain, preferably a non-*L. lactis* strain, is grown in a liquid medium containing an initial nisin concentration that allows growth of the strain at a low rate. This allows for enrichment of cells that have adapted to the initial nisin concentration. The adapted cells are selected for inoculation in higher concentrations of nisin and these steps are repeated until the cells are capable of growth at the desired nisin concentration. Thus, in a further aspect the invention relates to a process for obtaining a nisin-resistant bacterium, preferably a non-*L. lactis* bacterium, whereby the nisin-resistant bacterium is obtained by means of adaptation of the bacterium to a desired concentration of nisin. The process preferably comprises the steps of allowing the bacteria to grow at an initial low concentration of nisin, and repeatedly passing on the bacteria capable of growing at the lower concentration to a higher concentration of nisin, until the bacteria are resistant to a desired concentration of nisin as defined herein below.

The present invention for the first time discloses that it is possible to obtain by means of adaptation nisin-resistant strains with a variety of useful (Gram-positive) bacterial species, and, moreover, that the acquired nisin-resistance is sufficiently stable to allow the use of the nisin-resistant bacteria in nisin-producing starter cultures in the production of various fermented products, such as cheese, silage and fermented meats. For each bacterial species tested it was possible to achieve resistance to 1000 IU nisin per ml. The maximum resistance level was not determined and may differ significantly between the various bacterial species and strains. However, resistance to 1000 IU nisin per ml is more than enough for practical application of the strains in nisin-producing starter cultures for the various fermented products.

Alternatively, non-*L. lactis* strains may be made resistant to nisin by means of recombinant DNA technology as known per se to the skilled person. However, the use of such GMO strains is presently not preferred in view of the poor public acceptance of GMO's in food products.

The nisin-resistant bacteria of the invention are preferably metabolically active in at least 50 IU nisin per ml or more preferably in at least 100, 200, 500, or 1000 IU nisin per ml. The metabolic activity of the nisin-resistant bacteria is herein defined as their ability to grow in an appropriate medium, such as milk, with maintenance of their functional properties and may be measured by the growth rate and total growth obtained in the medium in combination with a test quantifying their specific functionality. Alternatively, the nisin-resistant non-*L. lactis* strains of the invention may be defined by their ability to grow in a medium containing preferably at least 50 IU nisin per ml or more preferably in at least 100, 200, 500, or 1000 IU nisin per ml, preferably at a rate that is no less than 10%, or more preferably no less than 25%, 50%, or 100% of the growth rate of that strain in the same medium without nisin.

In a preferred process according to the invention, the nisin-resistant non-*L. lactis* strain belongs to a genus selected from the group consisting of *Lactobacillus, Leuconostoc, Propionibacterium, Streptococcus, Pediococcus, Arthrobacter, Corynebacterium,* and *Staphylococcus.* In a further preferred process of the invention, the nisin-resistant non-L. *lactis* strain belongs to a species selected from the group consisting of *Lactobacillus delbrueckii, Lactobacillus delbrueckii* subsp. *bulgaricus Lactobacillus acidophilus, Lactobacillus caseii, Lactobacillus ssp., Lactobacillus helveticus, Lactobacillus crispatus, Lactobacillus amylovorus, Lactobacillus plantarum, Lactobacillus sanfrancisco, Lactobacillus pontis, Lactobacillus bavaricus, Lactobacillus curvatus, Lactobacillus sacei, Leuconostoc mesenteroides, Leuconoctoc lactis, Leuconostoc ssp., Pediococcus pentosaveus, Pediococcus avidilactici, Staphylococcus xylosus, Propionibacterium freudenreichii, Propionibacterium freudenreichii* subsp. *shermanii, Streptococcus thermophilus,* and *Streptococcus salivarius.*

Depending on the type of fermented product to be produced, the skilled person will know how to select from the above species one or more nisin-resistant strains to supplement the basic mesophilic nisin-producing starter culture. For example, for the manufacture of Maasdammer-type cheese the basic mesophilic nisin-producing starter culture is preferably supplemented with a nisin-resistant *Lb. delbruekii* subsp. *bulgaricus* and a nisin-resistant *P. freudenreichii* subsp. *freudenreichii*, whereby preferably about 5% (2.5-10%) of the total CFU of the starter culture are the nisin-resistant *Lb. delbruekii* subsp. *bulgaricus* and preferably about 5% (2.5-10%) of the total CFU of the starter culture are the a nisin-resistant *P. freudenreichii* subsp. *freudenreichii.* Alternatively, for the manufacture of Cheddar-type cheese the basic mesophilic nisin-producing starter culture is preferably supplemented with a nisin-resistant *S. thermophilus,* whereby preferably about 30% (10-50%) of the total CFU of the starter culture are the nisin-resistant *S. thermophilus.* Alternatively, for the manufacture of Parrano-type cheese the basic mesophilic nisin-producing starter culture is preferably supplemented with a nisin-resistant *Lb. crispatus*, whereby preferably about 75% (20-95%) of the total CFU of the starter culture are the nisin-resistant *Lb. crispatus.*

The manufacture of some types of cheeses e.g. Kernhemmer or Tilsitter, known as "schmier"-cheeses, involves the use of bacterial surface cultures or flora with bacteria such as *Corynebacterium* and/or *Arthrobacter*, of which preferably *C. ammoniagenes, C. variabile* and *A. nicotianae.* Included in the present invention are processes for the manufacture of such cheeses, which may be produced by a first fermentation step in which the cheese milk is acidified with a nisin producing mesophilic starter culture comprising at least a nisin-producing *L. lactis* strain, and optionally a nisin-immune *L. lactis* strain. The production of the cheese involves a second fermentation step, that is not necessarily separated in time from the first fermentation step, which include the application of nisin-resistant (non-*L. lactis*) bacteria on the surface of the cheese. The bacteria may be applied onto the surface e.g. by means of a sponge, a process known in the art as "schmiering", hence the name "schmier"-cheeses for cheeses produced this way.

Alternatively, for silaging of grass or whole crop maize the basic mesophilic nisin-producing starter culture is preferably supplemented with a nisin-resistant *Lb. plantarum*, whereby preferably about 40% (20-60%) of the total CFU of the starter culture are the nisin-resistant *Lb. plantarum.* Alternatively, for the fermentation of sourdough the basic mesophilic nisin-producing starter culture is preferably supplemented with one or more nisin-resistant strains of *Lb. sanfransisco, Lb. pontis*, and/or *Lb. bavaricus.* Alternatively, for the fermentation of meat the basic mesophilic nisin-producing starter culture is preferably supplemented with one or more nisin-resistant strains of *Lb. plantarum, Lb. curvatus, Lb. sacei, Pediococcus pentosaveus, P. avidilactici*, and/or *Staphylococcus xylosus.*

In further preferred embodiment the nisin-producing starter culture further comprises a *L. lactis* strain that is resistant to nisin but does not contain any transposons conferring nisin resistance, nisin immunity or nisin production. Such nisin-resistant *L. lactis* strains are obtained by adaptation to nisin in accordance with the invention. Such transposon-negative nisin-resistant *L. lactis* may be advantageously applied when a given *L. lactis* strain has properties incompatible with conjugations of transposons, e.g. because such properties are plasmid-encoded.

A further aspect of the invention relates to compositions comprising (a) a nisin-producing strain of *L. lactis* that is useful as starter in cheese production; and (b) a nisin-resistant bacterial strain, preferably a non-*L. lactis* strain that is useful as starter in cheese production. The composition may further preferably comprise (c) a nisin-immune strain of *L. lactis* that is useful as starter in the production of fermented products, preferably food- or feed-products. The nisin-producing *L. lactis*-strain, the nisin-resistant bacterial strain and the nisin-immune *L. lactis* strain are preferably as defined herein above. In a preferred composition of the invention, preferably at least 1, 2, or 5% of the bacteria in the composition are nisin-producing *L. lactis* whereas preferably no more than 50%, 20%, or 10% of the bacteria in the composition are nisin-producing *L. lactis.* The compositions comprising the nisin-producing *L. lactis* and the nisin-resistant bacteria are suitable for use as a starter culture in the production of fermented products, preferably fermented food- or feed-products such as dairy products, silage, sourdough or fermented meat products, more preferably cheeses, of which non-Gouda cheeses are preferred. Most preferred are cheeses the production of which involves fermentation with a non-*L. lactis* bacterium. Methods for producing the compositions of the invention are well known to the skilled person and will generally include separate large scale fermentation of the various bacteria to be included in the composition, preferably from single colony isolates, subsequent mixing of the bacteria in the desired ratio, and optionally further formulating the composition for storage, e.g. dried, frozen or otherwise. As indicated above, the skilled person knows, depending on the type of cheese for which the starter culture is intended, which bacteria to select for inclusion in the starter culture and also the ratio's between the various bacteria to be include.

A further aspect of the invention relates to nisin-resistant bacteria and to compositions comprising such bacteria. The nisin-resistant bacteria are preferably as defined herein above and are obtainable by means of adaptation to nisin as herein described.

Yet another aspect of the invention relates to nisin-containing fermented products, such as food- or feed-products: dairy products, silage, sourdough, fermented meat products, cheeses, including particularly non-Gouda cheeses, more particularly cheeses the production of which involves fermentation with a non-*L. lactis* bacterium. These products are obtainable in processes according to the invention, comprising the use of a nisin-producing *L. lactis* strain and a nisin-resistant non-*L. lactis* bacterium. A nisin-containing cheese produced according to the invention is characterized in that the nisin is distributed homogeneously throughout the cheese. Preferably such cheese is of a hard cheese-type or a semi-hard cheese-type.

Yet a further aspect of the invention relates to a process for producing a fermented product, wherein the process comprises a fermentation step using one or more nisin-resistant bacterial strains in the presence of nisin. The fermented products are as defined herein above. The nisin is preferably added to the starting materials (ingredients) of the fermented product prior to or together with the nisin-resistant bacterial strain(s). The concentration of the exogenously added nisin is preferably such that the nisin level in the fermented product is sufficient to prevent spoilage by bacteria. E.g. in the cheese making process this amount is preferably such that the nisin level in the cheese is sufficient to prevent butyric acid fermentation by *Clostridia.* For this purpose a level of preferably at least 20, 40, 80, 150, or 300 IU nisin per gram of fermented product is preferred. On the other hand, the amount of the nisin is preferably such that it does not exceed the maximum allowable level of nisin in the fermented product: the nisin level in the cheese preferably does not exceed a level of e.g. 1000, 750 or 500 IU per gram of cheese. The nisin-resistant bacterial strains are preferably as defined herein above and are obtainable by means of adaptation to nisin as herein described.

The invention advantageously allows for the *in situ* production of nisin in fermented products of which the production includes fermentation with *L. lactis.* Products produced in accordance with the methods of the invention are protected from spoilage bacteria, such as e.g. *Enteroccus, Micrococcus, Staphylococcus, Clostridium, Bacillus and Listeria.* The food-products thus produced also reduce health risks associated with food borne pathogens. A further advantage of the invention is that the *in situ* produced nisin is not an added food-ingredient that needs to be declared and requires approval from the regulatory authorities. Yet another advantage of the *in situ* produced nisin is that the nisin is distributed homogeneously throughout the fermented product. Another advantage of the invention is that each of the nisin-producing, nisin-resistant and nisin-immune phenotypes are obtainable without using recombinant DNA technology. This allows to avoid any problems with public acceptance of the use of GMO's in the production of food.

### Examples

### General methods and materials

The nisin activity determination is based on a bioassay agar method with *Micrococcus flavus* as indicator strain (Bouksaim et al, 2000; Effects of mixed starter composition on nisin Z production by *L. lactis* subsp. *lactis* biovar. *diacetylactis* UL 719 during production and ripening of Gouda cheese. International J. of Food Microbiol. 59, 141-156). The activity of nisin is expressed in IU, in which 40 IU corresponds with 1µg of pure nisin.

A range of nisin A or nisin Z producing *L. lactis* strains is available from a variety of sources as mentioned in Table 3 of WO 92/18633.The nisin-immune *L. lactis* strain R520, that can serve as a donor strain for transposon Tn*5276-NI*, providing nisin-immunity, was deposited 3 April 1991 at the Centraalbureau voor Schimmelcultures, Baarn, The Netherlands and was given accession number CBS 181.91.

### Example 1

### Adaptation of Gram-positive bacteria to nisin

The process was started with the step of allowing a strain *Lb. delbruekii* subsp. *bulgaricus* to grow at an initial low concentration of nisin of 10 IU/ml in milk at 37°C, and repeatedly passing on the bacteria capable of growing at the lower concentration to a higher concentration of nisin, until the bacteria are resistant to 1000 IU/ml. Using the same protocol also strains of *P. freudenreichii* subsp. *freudenreichii, S. thermophilus, Lb. crispatus, Lb. plantarum* and *Lb. sanfrancisco* were adapted to being resistant to 1000 IU nisin/ml.

### Example 2

### Manufacture of Maasdammer-type cheese using a nisin producing starter culture

A nisin-producing starter culture consisting of Dairysafe ™ TC17 and 13M at equal dosage (obtained from CSK food enrichment, Leeuwarden, The Netherlands), was supplemented with 5% of the nisin- resistant *Lb. delbrueckii* subsp. *bulgaricus* strain, as obtained in Example 1, and with 5% of the nisin- resistant *P. freudenreichii* subsp. *freudenreichii* strain, as obtained in Example 1. This supplemented nisin-producing starter culture was used for the production of Maasdammer-type cheese using standard procedures, [as described in Dutch-Type Varieties van P. Walstra, A. Noomen and T.J. Geurts. Pg 39-83 *In: Cheese: Chemistry, Physics and Microbiology, Vol 2, Major cheese groups. Edited by P.F. Fox.* Reference Maasdammer-type cheese was prepared in parallel using a standard Maasdammer starter culture and otherwise identical procedures.

Propionic acid fermentation and "eye"-formation were similar to the reference cheese. The nisin production in the cheeses prepared with the nisin starter culture was around 200 IU nisin per gram of cheese. The organoleptic quality of the nisin-containing cheeses was similar to that of the reference cheese.

### Example 3

### Manufacture of Cheddar-type cheese using a nisin producing starter culture

A nisin-producing starter culture consisting of Dairysafe ™ TC17 and 13M at equal dosage (obtained from CSK food enrichment, Leeuwarden, The Netherlands) is supplemented with 30% of the nisin-resistant *S. thermophilus,* as obtained in Example 1. This supplemented nisin-producing starter culture is used for the production of Cheddar-type cheese using standard procedures. Reference Cheddar-type cheese is prepared in parallel using a standard Cheddar starter culture and otherwise identical procedures. The use of the starter system containing the nisin- resistant *S. thermophilus* does not affect the acidification rate of the cheese and the final organoleptic quality compared to the reference cheese. The nisin production in the cheeses prepared with the nisin starter culture is around 200 IU nisin per gram of cheese.

### Example 4

### Manufacture of Parrano-cheese using a nisin producing starter culture

A nisin-producing starter culture consisting of Dairysafe ™ TC17 and 13M at equal dosage (obtained from CSK food enrichment, Leeuwarden, The Netherlands) is supplemented with 30% of the nisin-resistant *Lb. crispatus,* as obtained in Example 1. This supplemented nisin-producing starter culture is used for the production of Parrano cheese (a Proosdij-type of cheese) using standard procedures. Reference Parrano cheese is prepared in parallel using a standard Parrano starter culture and otherwise identical procedures. The use of the starter system containing the nisin-resistant *Lb. crispatus* does not alter the final organoleptic quality compared to the reference cheese. The nisin production in the cheeses prepared with the nisin starter culture is around 200 IU nisin per gram of cheese.

### Example 5

### Using the nisin producing starter culture for silage

A nisin-producing starter culture consisting of Dairysafe ™ TC17 and 13M at equal dosage (obtained from CSK food enrichment, Leeuwarden, The Netherlands), is supplemented with 20-60% of the nisin- resistant *Lb. plantarum*, as obtained in Example 1. This supplemented nisin-producing starter culture is used for silage of e.g. whole crop maize or grass using standard procedures. Reference silage is prepared in parallel using a standard *Lb. Plantarum* starter culture and otherwise identical procedures. The use of the nisin-producing starter system does not affect of the rate of pH-decline, the final concentration rates of organic acids, the ammonia-N concentration as percentage of total N and the weight-loss due to CO-2 production, as compared to the use of the standard *Lb. Plantarum* starter culture. The nisin production in the silage prepared with the nisin starter culture is around 200 IU nisin per gram of fermented grass.

### Example 6

### Using the nisin producing starter culture for fermentation of sour-dough

A nisin-producing starter culture consisting of Dairysafe ™ TC17 and 13M at equal dosage (obtained from CSK food enrichment, Leeuwarden, The Netherlands), is supplemented with 20-60% of the nisin- resistant *Lb. sanfrancisco*, as obtained in Example 1. This supplemented nisin-producing starter culture is used for the fermentation of sourdough using standard procedures. Reference sourdough_is prepared in parallel using a standard starter culture of *Lb. sanfrancisco*, and otherwise identical procedures. The use of the nisin-producing starter system does not affect the final organoleptic quality compared to the reference sourdough, as compared to the use of the standard starter system. The nisin production in the sourdough prepared with the nisin starter culture is around 100 IU nisin per gram of sourdough.

### Example 7

### Using the nisin producing starter culture for fermentation of meat

A nisin-producing starter culture consisting of Dairysafe ™ TC17 and 13M at equal dosage (obtained from CSK food enrichment, Leeuwarden, The Netherlands), is supplemented with 20-60% of the nisin- resistant *Lb. plantarum* as obtained in Example 1. This supplemented nisin-producing starter culture is used for the fermentation of meat using standard procedures. Reference meat is fermented and prepared in parallel using a standard starter culture of the above mentioned strains and otherwise identical procedures. The use of the starter system containing the nisin-resistant *Lb. plantarum* does not affect the final organoleptic quality compared to the reference fermented meat. The nisin production in the fermented meat prepared with the nisin starter culture is around 100 IU nisin per gram of meat.

## Claims

1. A process for producing a fermented product, wherein the process comprises a fermentation step using one or more nisin-resistant bacterial strains in the presence of nisin.

2. A process according to claim 1, wherein in the fermentation step a starter culture is used comprising:
(a) a nisin-producing strain of *Lactococcus lactis*; and
(b) one or more nisin-resistant non-*Lactococcus lactis* bacterial strains.

3. A process according to claim 2, wherein the starter culture further comprises:
(c) a nisin-immune strain of *Lactococcus lactis.*

4. A process according to any one of claims 1 - 3, wherein the fermented product is a dairy product, sourdough, a fermented meat product or silage

5. A process according to claim 4, wherein the dairy product is a cheese the production of which involves fermentation with a non-*L. lactis* bacterium.

6. A process according to any one of claims 1 - 5, wherein the nisin-resistant non-*Lactococcus lactis* strain is metabolically active in a medium containing at least 50 IU nisin per ml.

7. A process according to any one of claims 1 - 6, wherein the nisin-resistant non-*Lactococcus lactis* strain belongs to a genus selected from the group consisting of *Arthrobacter, Corynebacterium, Lactobacillus, Leuconostoc, Pediococcus, Propionibacterium, Streptococcus,* and *Staphylococcus.*

8. A process according to claim 7, wherein the nisin-resistant non-*Lactococcus lactis* strains are *Lb.delbrueckii* subsp. *bulgaricus* and *P. freudenreichii.*

9. A composition comprising:
(a) a nisin-producing strain of *Lactococcus lactis*; and
(b) a nisin-resistant non-*Lactococcus lactis* strain.

10. A composition according to claim 9, further comprising:
(c) a nisin-immune strain of *Lactococcus lactis.*

11. A composition according to claims 9 or 10, wherein 1 - 20% of the total CFU in the composition are the nisin-producing strain of *Lactococcus lactis.*

12. A composition according to any one of claims 9 - 11, wherein the composition comprises a nisin-resistant *Lb. delbrueckii* subsp. *bulgaricus* and a nisin-resistant *P. freudenreichii.*

13. A nisin-resistant non-*L. lactis* bacterium that is metabolically active in a medium containing at least 50 IU nisin per ml.

14. A process for obtaining a nisin-resistant non-*L. lactis* bacterium whereby the process comprises adapting a bacterium to nisin by growing a bacterium in a medium at a low initial concentration of nisin and repeatedly passing on the bacteria to media with higher concentrations of nisin until a bacterial strain is obtained that is metabolically active in a medium containing at least 50 IU nisin per ml.

15. A nisin-containing cheese, the production of which involves fermentation with a non-*L. lactis* bacterium whereby the nisin is distributed homogeneously throughout the cheese.
